# EUROPEAN PATENT SPECIFICATION

(11) **EP 2 641 879 B1**
(45) Date of publication and mention of the grant of the patent: **28.02.2018**
(21) Application number: 13160523.0
(22) Date of filing: 22.03.2013
(51) Int. Cl.: C02F 11/12, B30B 9/12, B01D 29/35, B01D 29/64, B01D 29/82

(54) **A screw press and the use of the screw press for dewatering of sludge**
Schraubenpresse und Verwendung der Schraubenpresse zum Entwässern einer Aufschlämmung
Presse à vis et utilisation de celle-ci pour l'assèchement de boues

(30) Priority: 22.03.2012 DK 201200051 U
(43) Date of publication of application: 25.09.2013
(73) Proprietor: Alfa Laval Corporate AB, 221 00 Lund (SE)
(72) Inventor: Stjernholm, Kaj, 6950 Ringköping (DK)
(74) Representative: Alfa Laval Attorneys

(56) References cited:
- EP-A1- 1 013 614
- JP-A- 2003 220 308
- US-A- 1 604 652
- US-A- 4 582 568
- US-A- 4 781 823

## Description

The invention related to a device for removing a liquid from a product to achieve a concentrate, more specifically to a screw press for dewatering sludge and the use of the device for dewatering a sludge including liquid state material.

### BACKGROUND OF INVENTION

In connection with, for example, conventional waste water treatment, sludge is produced. Sludge typically consists of suspended organic and inorganic solids as well as dissolved solids in a large amount of water. To prepare the sludge for further treatment it is normally fed to a dewatering unit for removal of water and concentration of the solids content. To assure an effective dewatering process in the dewatering unit, the sludge is typically treated inside a flocculation device before being fed to the dewatering unit. In the flocculation device the sludge is mixed with a flocculation agent, typically a polymer, which makes the solids in the sludge agglomerate into larger lumps or flocks which are easier to separate from the water than the individual solid particles.

There are several ways to dewater sludge - the most common is drainage of band filter, dewatering by centrifuge and drainage via a screw presses. The screw press is the type of dewatering devices that use less energy.

The main elements of the screw press are inside a conical screw or auger, around which there is a screen or filter. The screen or filter is provided with slots. The conical shape of the screw or auger is adapted to sludge volume change during the dewatering. The diameter of the screw or auger increases along the path of the sludge through the screw press.

In the end of the screen along the sludge path in the screen, which is also the end of the auger, a hold-up device or a back pressure device is arranged that through pneumatic cylinders makes it possible to maintain a constant back pressure at sludge outlet. Experiments have shown that the pressure inside the screen should be from about 0.3 bar to about 0.6 bar. If the internal pressure becomes too great result is a massive clogging of the slots in the screen - a blockage that requires cleaning with high pressure. In order to avoid blockage of the slots in the screen the windings of the auger are provided with brushes to clean the inside of the screen.

Experiments have shown that the screw speed should be variable from approximately 0.3 rpm to approximately 2 rpm.

The screen is cleaned on the exterior with water. Around the screen are located nozzles that with preset intervals spray water toward the slots of the screen. The water used may be cleaned and filtered water.

However, it has been found that there are some disadvantages to this known technique, including the fact that the inlet to the screw presses are inflexible, wherein piping connected to the screw press can be complicated when the screw press must be installed in a given application.

In the art is known US 4 582 568 which describes an apparatus for controlling the consistency of a pulp suspension, EP-1 013 614-A1 which describes dewatering of fermentation products with a screw press and US 1 604 652 which describes a process of and apparatus for treating, dewatering, compressing and drying industrial waste, sewage solids etc.

### DISCLOSURE OF INVENTION

It is therefore an object of the subject matter to provide an improved dewatering device compared with the prior art.

The objective can be achieved by a screw press according to claim wherein the inlet includes a cylindrical pipe section with end flanges, which are provided with a plurality of holes, and an inlet pipe which is connected to the cylindrical conduit through an opening hole.

Thereby is possible to twist and turn the inlet so that the inlet pipe can be turned into multiple directions, whereby the piping connected to the screw press during installation can be simplified and optimized.

According a further aspect of the invention, the inlet pipe is preferably bent in 90 degrees and the inlet pipe is provided with a flange having holes which are arranged with equal distance to each other around the flange. The inlet is also provided with a removable end piece.

As mentioned, the subject matter is also the use for dewatering of liquid state material including sewage sludge.

This invention makes it possible to achieve a simple and optimized piping of the inlet for a screw press during installation of the screw press.

### BRIEF DESCRIPTION OF THE DRAWINGS

Further objects, features and advantages will appear from the following detailed description of several embodiments of the invention with reference to the drawings, in which:
Fig. 1 is a perspective view of a device according to one embodiment of the screw press,
Fig. 2 is a view of one end of the screw press of Fig. 1.
Fig. 3 is a side view of the screw press of Fig. 1.
Fig. 4 is a top view of the screw press of Fig. 1.
Fig. 5 shows a cross-sectional view of the screw press of Fig. 1
Fig. 6 shows a detailed view of a section of the screw press of Fig. 1 having mounted an inlet.
Fig. 7 shows detailed view of the inlet of the screw press of Fig. 1.
Fig. 8 shows an end piece to the inlet of the screw press of Fig. 1.

### DETAILED DESCRIPTION OF EMBODIMENTS

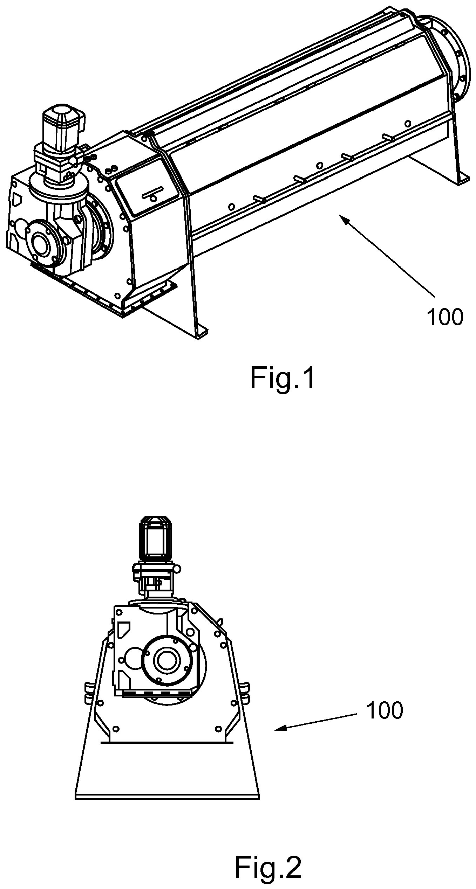

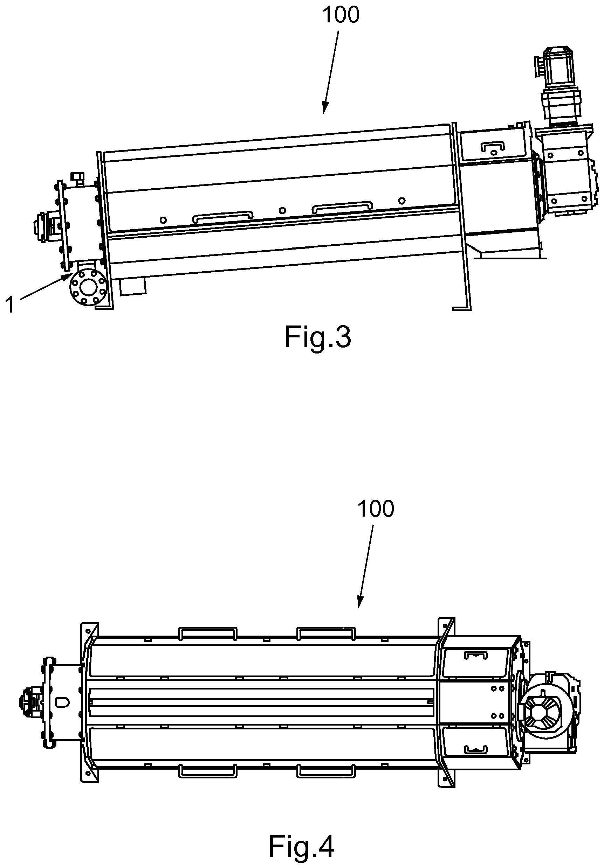

With reference to Figs. 1-8, a device 100 for removing liquid from a product to achieve a concentrate, is shown. The liquid to be removed from the product is water, why dewatering is an alternative term for the process performed by means of the device 100. The product to be treated by means of the device 100 is sludge produced in connection with waste water treatment as mentioned by way of introduction. When removing water from the sludge, the solids remain as a concentrate ready for further handling as desired. For example, such further handling could involve burning of the solids concentrate to generate energy.

The device 100, also called screw press, includes an inlet 1, screw or auger 2, spraying nozzles 3, a drainage filter 4, a filtering filter 5, pressure or column filter 6, a back pressure device 7, air pressure cylinder 8, outlet 9, drain 10 and a gear motor 11. The drainage filter 4, the filtering filter 5 and the column filter 6 are mounted together to form a long screen that encircles the auger 2. Outside and around the screen are nozzles 3 mounted to enables cleaning of the screen or the filter 4, 5 and 6 to be cleaned by spraying a liquid, such as water, towards the screen. The auger 2 is rotated by the gear motor 11. In a first end of the screen an inlet 1 are arranged adjacent enabling a feed of sludge into the interior of the screen. Adjacent to a second and opposite end of the screen a back pressure or pressure cone 7 are arranged and that through pneumatic or air pressure cylinders 8 makes it possible to maintain a constant back pressure at sludge outlet 9. The water that has been filtered through the screen are collected in the bottom area of the screw press and guided out of the screw press through the drainage 10, which drainage 10 are located close to the inlet 1. The screw press 100 is normally arranged so that the first end of the screen is located lower than the second end of the screen to enable gravity drainage through the drainage 10.

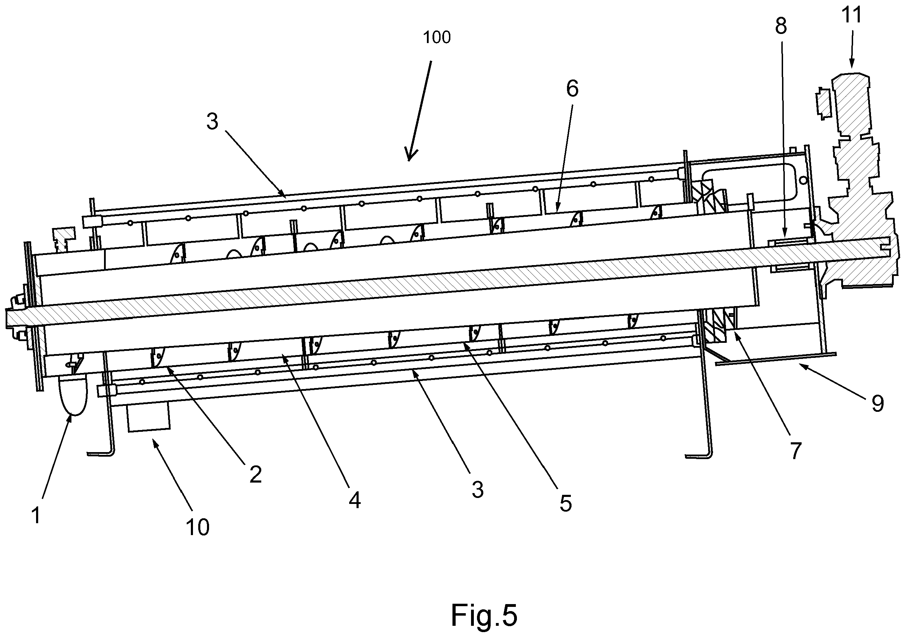

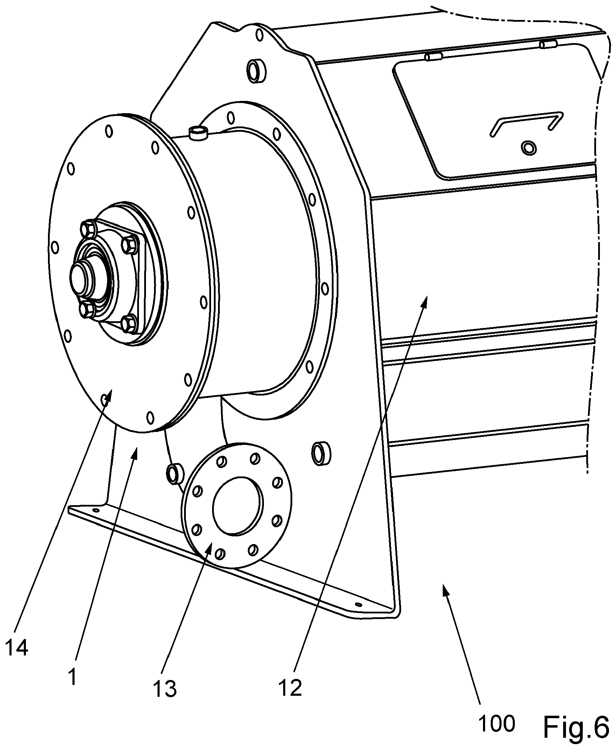

In Fig. 6, a detailed partial view of a section of the screw press 100 is shown, where the screw or auger 2 (shown in Fig. 5) is positioned in the area 12. The screw press 100 is provided with an inlet 1, which inlet 1 includes an inlet pipe or tube 19, through which the sludge is feed into the screw press 100 and the screen. The inlet pipe 19 has an end flange 13 provided in a free end of the inlet pipe for connecting to a piping system (not shown). The inlet 1 is also provided with an end-piece 14, which can be used as a basis for a bearing for a shaft which drives the screw or auger 2.

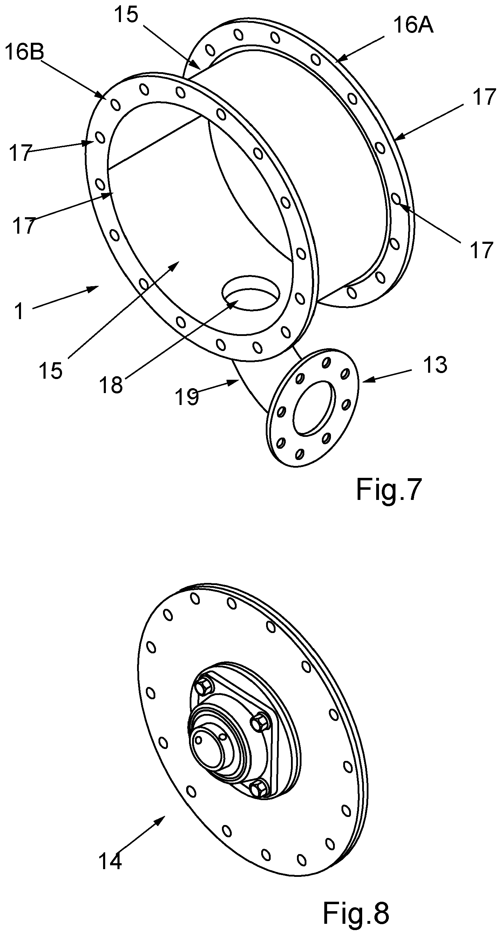

In Fig. 7 the inlet 1 is shown, which comprises a cylindrical piece of pipe or pipe section 15 provided with end flanges 16A, 16B. The end flanges 16A, 16B are provided with a plurality of holes 17 for mounting the inlet 1 on the screw press 100. The cylindrical pipe section 15 is further provided with an inlet pipe 19, which is connected to the cylindrical pipe section 15 via an opening hole 18.

The inlet pipe 19 is preferably bent 90 degrees from a first end at the opening hole 18 to the free end provided with the flange 13.

The holes 17 of the end flanges 16A, 16B on the inlet 1 are located in the center of the same radius of the cylindrical pipe section 15 and having equal spacing between the holes 17 along the end flanges 16A, 16B. Since the holes are equally spaced it is possible to turn the inlet 1 relative to the screw press part in steps corresponding to the distance between two holes 17.

In addition, the advantage is obtained that the entire inlet 1 can be turned 180 degrees wherein the inlet pipe 19 also turns 180 degrees. Thereby the location of the inlet pipe 19 is flexible in relation to the rest of the screw press 100. Thereby it is very easy to adjust the inlet pipe 19 to the connecting piping system, which makes the installation of the screw press in a given location much easier.

The operation of the screw press 100 will now be described with reference to the drawings. When the screw press 100 is operated, the auger 2 is rotated inside the screen formed by the drainage filter 4, the filtering filter 5 and the column filter 6. The sludge is fed, from a supply not illustrated, to the screw press 100 via a piping system through the inlet pipe 19 and further into the interior of the screen via the inlet 1. After entering the interior of the drainage filter 4, which is the first section of the screen, the sludge will be fed towards the outlet 9 of the drum by the auger 2. When fed through the interior of the screen, the sludge is dewatered gradually, which means that the water leaves the interior of the screen through the different filters 4, 5 and 6, while most of the solids remain inside the interior of the screen. More precisely the sludge will be spontaneously drained through the slots of the drainage filter 4 during the first part of the passage through the screen. During the second part (through filtering filter 5) of the passage through the screen the sludge will be filtered through the slots of the filtering filter 5 by density and in the third part of the passage through the screen the sludge is dewatering through slots of the filter 6 by means of the back pressure device 7 provided by the air pressure cylinder 8. Finally the remaining sludge, also called the cake, is fed through the outlet 9. The filtered water are collected in a bottom area of the screw press and guided out of the screw press through the drainage 10

Three dewatering zones for the sludge are created during the fed through the interior of the screen; a drainage zone, a filtering zone and pressure zone. The slots of the three filters 4, 5 and 6 may vary in size and having shapes like slots, slits, rounded holes or any combination of these. The spray nozzles 3 arranged along and around the filters 4, 5 and 6 ensure a continuous spraying of the filter 4, 5 and 6 to prevent any blockage of the slots.

With the screw press 100 according to the above embodiment it is possible dewater the sludge so that the solids content from being approximately 1 % of the sludge before dewatering to be approximately 18-25% of the sludge after dewatering.

As seen in Figs. 1, 3, 4 and 5 is the screw press 100 provided with inspection hatches or lid enables easy access to the filters, the inlet and the outlet for service, maintenance and inspection of the different parts.

The invention is not limited to the embodiments described above and shown on the drawings, but can be supplemented and modified in any manner within the scope of the invention as defined by the enclosed claims.

## Claims

1. A screw press (100) for dewatering sludge having three after each other arranged filters for dewatering, including, a drainage filter (4), a filtering filter (5), and a column filter (6), and which also includes a back pressure device (7) for creating a pressure inside the filters, further having an inlet (1) for feeding the sludge into the screw press, an outlet (9), an auger (2) arranged inside the filters for feed the sludge through the fed towards the outlet (9), **characterized in that** the inlet (1) comprises a cylindrical pipe section (15) with end flanges (16A, 16B), which end flanges (16A, 16B) are provided with a plurality of holes (17), and the cylindrical pipe section (15) being further provided with an inlet pipe (19) which inlet pipe (19) is connected to the cylindrical pipe section (15) via an opening hole (18) in the side wall of the cylindrical pipe section (15), where the inlet (1) is flexibly arranged relatively to the rest of the screw press, enabling the inlet (1) to be adjusted to a piping system connected to the screw press (100), and where the cylindrical pipe section (15) of the inlet (1) is provided with an end piece (14).

2. A screw press (1) for dewatering sludge according to claim 1, wherein the holes (17) arranged on the end flanges (16A, 16B) enable the inlet (1) to be rotated relatively to the rest of the screw press (100).

3. A screw press (1) for dewatering sludge according to claim 2, wherein the inlet pipe (19) is bent 90 degrees from a first end connected to the inlet (1) to a second free end.

4. A screw press (1) for dewatering sludge according to claim 3, wherein the inlet pipe (19) is provided with a flange (13) in the free end for connecting to a piping system.

5. The use of the screw press (100) according to one or more of claims 1 to 4 for dewatering sludge including liquid state material.

## Patentansprüche

1. Schraubenpresse (100) zum Entwässern von Schlamm, die drei nacheinander angeordnete Filter zum Entwässern hat, die einen Drainagefilter (4), einen Filterungsfilter (5) und einen Säulenfilter (6) einschließen, und die ebenfalls eine Gegendruckvorrichtung (7) zum Erzeugen eines Drucks innerhalb der Filter einschließt, wobei sie ferner einen Einlass (1) zum Fördern des Schlamms in die Schraubenpresse, einen Auslass (9), einen Schneckenförderer (2), der innerhalb der Filter angeordnet ist, um den Schlamm durch das Geförderte zu dem Auslass (9) hin zu fördern, hat, **dadurch gekennzeichnet, dass** der Einlass (1) eine zylindrische Rohrsektion (15) mit Endflanschen (16A, 16B) umfasst, wobei die Endflansche (16A, 16B) mit mehreren Löchern (17) versehen sind und die zylindrische Rohrsektion (15) ferner mit einem Einlassrohr (19) versehen ist, wobei das Einlassrohr (19) über ein Öffnungsloch (18) in der Seitenwand der zylindrischen Rohrsektion (15) mit der zylindrischen Rohrsektion (15) verbunden ist, wobei der Einlass (1) flexibel im Verhältnis zu dem Rest der Schraubenpresse angeordnet ist, was ermöglicht, dass der Einlass (1) an ein Verrohrungssystem, das mit der Schraubenpresse (100) verbunden ist, angepasst wird, und wobei die zylindrische Rohrsektion (15) des Einlasses (1) mit einem Endstück (14) versehen ist.

2. Schraubenpresse (1) zum Entwässern von Schlamm nach Anspruch 1, wobei die Löcher (17), die an den Endflanschen (16A, 16B) angeordnet sind, ermöglichen, dass der Einlass (1) im Verhältnis zu dem Rest der Schraubenpresse (100) gedreht wird.

3. Schraubenpresse (1) zum Entwässern von Schlamm nach Anspruch 2, wobei das Einlassrohr (19) um 90 Grad von einem ersten Ende, das mit dem Einlass (1) verbunden ist, zu einem zweiten freien Ende gebogen ist.

4. Schraubenpresse (1) zum Entwässern von Schlamm nach Anspruch 3, wobei das Einlassrohr (19) in dem freien Ende mit einem Flansch (13) zum Verbinden mit einem Verrohrungssystem versehen ist.

5. Verwendung der Schraubenpresse (100) nach einem oder mehreren der Ansprüche 1 bis 4 zum Entwässern von Schlamm, der Material in flüssigem Zustand einschließt.

## Revendications

1. Presse à vis (100) pour déshydrater des boues, comportant trois filtres agencés les uns derrière les autres pour la déshydratation, un filtre de drainage (4), un filtre de filtration (5) et un filtre à colonne (6), et incluant en outre un dispositif à contre-pression (7) pour créer une pression à l'intérieur des filtres, comportant en outre une entrée (1) pour amener la boue dans la presse à vis, une sortie (9),une vis sans fin (2) agencée à l'intérieur des filtres pour amener la boue à travers l'alimentation vers la sortie (9), **caractérisée en ce que** l'entrée (1) comprend une section de tuyau cylindrique (15) avec des brides d'extrémité (16A, 16B), ces brides d'extrémité (16A, 16B) comportant plusieurs trous (17) et la section de tuyau cylindrique (15) comportant en outre un tuyau d'entrée (19), ce tuyau d'entrée (19) étant connecté à la section de tuyau cylindrique (15) par l'intermédiaire d'un trou d'ouverture (18) dans la paroi latérale de la section de tuyau cylindrique (15), dans laquelle l'entrée (1) est agencée de manière flexible par rapport à la partie restante de la presse à vis , permettant l'ajustement de l'entrée (1) sur un système de tuyauterie connecté à la presse à vis (100), et dans laquelle la section de tuyau cylindrique (15) de l'entrée (1) comporte une pièce d'extrémité (14).

2. Presse à vis (1) pour déshydrater des boues selon la revendication 1, dans laquelle les trous (17) agencés sur les brides d'extrémité (16A, 16B) permettent la rotation relative de l'entrée (1) par rapport à la partie restante de la presse à vis (100).

3. Presse à vis (1) pour déshydrater des boues selon la revendication 2, dans laquelle le tuyau d'entrée (19) est fléchi à 90 degrés, d'une première extrémité connectée à l'entrée (1) vers une deuxième extrémité libre.

4. Presse à vis (1) pour déshydrater des boues selon la revendication 3, dans laquelle le tuyau d'entrée (19) comporte une bride (13) dans l'extrémité libre en vue d'une connexion à un système de tuyauterie.

5. Utilisation de la presse à vis (100) selon l'une ou plusieurs des revendications 1 à 4, pour déshydrater une boue incluant un matériau à l'état liquide.
